# FASCICULE DE BREVET EUROPEEN

(11) **EP 1 607 995 B1**
(45) Date de publication et mention de la délivrance du brevet: **07.02.2007**
(21) Numéro de dépôt: 05354018.3
(22) Date de dépôt: 08.04.2005
(51) Int. Cl.: H01H 83/10

(54) **Dispositif de protection contre des surtensions**
Sicherheitsvorrichtung gegen Überspannungen
Safety appliance against overvoltage

(30) Priorité: 18.06.2004 FR 0406657
(43) Date de publication de la demande: 21.12.2005
(73) Titulaire: SCHNEIDER ELECTRIC INDUSTRIES SAS, 92500 Rueil-Malmaison (FR)
(72) Inventeur: Domejean, Eric, 38050 Grenoble Cedex 09 (FR); Fagnoul, Joël, 38050 Grenoble Cedex 09 (FR); Tallier, Jean-Baptiste, 38050 Grenoble Cedex 09 (FR); Vandermotten, Alain, 38050 Grenoble Cedex 09 (FR)
(74) Mandataire: Tripodi, Paul

(56) Documents cités:
- EP-A- 0 046 545
- FR-A- 2 545 999
- FR-A- 2 846 478

## Description

### DOMAINE TECHNIQUE

L'invention concerne un dispositif de protection contre des surtensions comportant au moins un module de protection destiné à être connecté à un appareil de coupure électrique, ledit module comportant :
- au moins un élément de protection contre les surtensions ; et
- des moyens de séparation reliés à au moins un élément de protection pour provoquer une séparation électrique et/ou mécanique représentative d'un défaut d'un élément de protection suite à une augmentation de température et/ou de courant électrique.

### ETAT DE LA TECHNIQUE

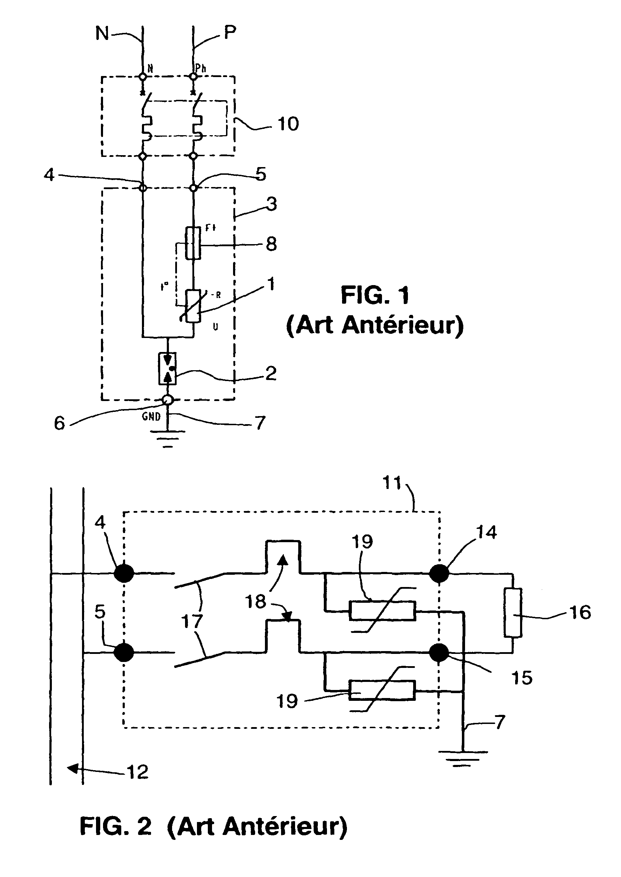

Les dispositifs de protection contre les surtensions connus comportent au moins un élément de protection contre les surtensions, notamment une varistance ou un éclateur. Comme représentés sur la figure 1 une varistance 1 et/ou un éclateur 2 sont généralement disposés dans un boîtier 3. Par exemple, dans le cas d'un branchement bipolaire, le dispositif comprend une entrée 4 pour être connectée à un conducteur de neutre N, une entrée 5 pour être connectée à un conducteur de phase P, et une borne 6 de raccordement d'un conducteur 7 de terre. Généralement, la varistance est connectée entre une phase et un neutre et l'éclateur et connecté entre le neutre et le conducteur de terre, mais d'autres types de connexions ou de disposition peuvent être utilisés. La varistance 1 est connectée en série avec un fusible thermique 8 pour provoquer l'ouverture du circuit lorsque la varistance chauffe. Un échauffement de la varistance peut être générer par un courant de fuite suite à un ou plusieurs chocs électriques.

Le fusible thermique 8 est parfois insuffisant pour protéger les éléments de protection 1 et 2. Sur la figure 1, un disjoncteur 10 connecté en amont des bornes 4 et 5 assure une protection électrique du dispositif.

Il existe aussi des dispositifs réalisés par une combinaison d'un disjoncteur et d'éléments de protection. Un exemple de combinaison est représenté sur la figure 2. Le dispositif comporte un boîtier 11 avec des entrées 4 et 5 connectées en amont à un réseau électrique 12 et des sorties 14 et 15 pour alimenter une charge 16. Entre les entrées et les sorties un disjoncteur comporte des contacts principaux 17 en série avec un relais 18 de protection thermique ou magnétothermique. Dans le même boîtier, des varistances 19 sont connectées entre les sorties et un conducteur de terre 7. De telles combinaisons sont décrites dans les brevets US4168514 et US5321574.

Le document "FR-A-2 545 999" décrit un dispositif selon le préambule de la revendication 1.

Dans les dispositifs de l'état de la technique, lorsqu'un défaut électrique provoque le déclenchement d'un disjoncteur de protection, un utilisateur peut ré-enclencher le dispositif alors que des éléments de protection contre les surtensions sont défectueux.

De plus, les dispositifs de l'état de la technique basés notamment sur des combinaisons de la figure 2 protègent les charges connectées en aval des disjoncteurs. Si le disjoncteur est déclenché par un défaut sur les varistances, notamment par échauffement ou par court-circuit, l'alimentation de la charge n'est plus assurée. Dans un tel cas, il y un risque élevé d'indisponibilité de l'installation.

### EXPOSE DE L'INVENTION

L'invention a pour but un dispositif de protection contre les surtensions permettant une protection efficace contre les surtensions, une utilisation améliorée et une grande disponibilité de l'alimentation électrique d'une installation.

Dans un dispositif selon l'invention, le module de protection comporte des moyens d'actionnement mécanique reliés audits moyens de séparation et comportant une liaison mécanique de commande, ladite liaison mécanique de commande étant mise dans un état de déclenchement représentatif d'un défaut d'au moins un élément de protection lorsque lesdits moyens de séparation ont provoqué une séparation, lesdits moyens d'actionnement mécanique étant destinés à être couplés à un appareil de coupure électrique à travers la liaison mécanique pour actionner l'ouverture ou le déclenchement dudit appareil lorsque ladite liaison mécanique est dans un état de déclenchement.

Avantageusement, les moyens d'actionnement mécanique bloquent la liaison mécanique dans un état de déclenchement lorsque lesdits moyens de séparation ont provoqué une séparation.

De préférence, au moins un élément de protection est au moins une varistance en liaison thermique avec un pion thermique des moyens de séparation, ledit pion étant relié aux moyens d'actionnement mécanique pour positionner la liaison mécanique dans un état de déclenchement suite à une fusion dudit pion provoquée par un échauffement de ladite varistance.

De préférence, au moins un élément de protection est au moins un éclateur de tension en liaison électrique avec un fusible électrique des moyens de séparation, ledit fusible étant relié aux moyens d'actionnement mécanique pour positionner la liaison mécanique dans un état de déclenchement suite à une fusion dudit fusible provoquée par une augmentation du courant dans ledit éclateur.

Avantageusement, les moyens d'actionnement mécanique comportent des moyens de centralisation pour centraliser des actions mécaniques provoquées par des liaisons avec des pions thermiques ou des fusibles des moyens de séparation.

Dans un mode de réalisation préféré, les moyens d'actionnement mécanique comportent :
- au moins un levier relié d'une part aux moyens de séparation et d'autre part à la liaison mécanique, et
- au moins un ressort de rappel relié audit levier et à un boîtier du module de protection pour rappeler ledit levier dans une position de défaut lorsqu'un élément des moyens de séparation libère le levier suite à une séparation mécanique due à des contraintes thermiques ou électriques ;
ladite liaison mécanique étant actionnée et maintenue dans un état de déclenchement par le levier lorsqu'il est dans une position de défaut.

Selon une variante, les moyens de séparation comportent au moins une combinaison d'un élément fusible électrique et d'un pion thermique, la séparation mécanique de l'élément fusible électrique ou du pion thermique pouvant provoquer la commande des moyens d'actionnement mécanique.

De préférence, les moyens de séparation comportent au moins pion thermique réalisé en alliage métallique ou en matière plastique thermo-fusible, la fonte ou la fusion du pion provoquant une séparation mécanique agissant sur les moyens mécaniques d'actionnement.

Dans un mode de réalisation particulier, au moins un module de protection comporte des moyens de séparation avec un élément fusible électrique composé d'une lame métallique positionnée dans des ailettes de répartition d'arc.

De préférence, au moins un module de protection comporte des moyens mécaniques de visualisation de l'état de fonctionnement du dispositif de protection, lesdits moyens de visualisation comportant une liaison mécanique destinée à être couplée avec un organe de manoeuvre d'un appareil de coupure électrique.

Selon une première variante, au moins un module de protection comporte des moyens mécaniques de visualisation de l'état de fonctionnement du dispositif de protection actionnés par la liaison mécanique de commande.

Selon une seconde variante, au moins un module de protection comporte des moyens mécaniques de visualisation locale actionnés par les moyens d'actionnement pour signaler de manière différentiée l'état des moyens de séparation d'au moins deux éléments de protection

Dans un mode de réalisation préférentiel, le dispositif de protection comporte un appareil de coupure électrique associé audit module de protection, ledit appareil comportant des entrées destinées à être connectées à une ligne à protéger, des contacts principaux commandés par un mécanisme de déclenchement, et des sorties, ledit au moins un élément de protection contre les surtensions étant connecté aux sorties de l'appareil de coupure et la liaison mécanique de commande étant reliée aux moyens de déclenchement pour actionner l'ouverture et/ou bloquer la fermeture des contacts principaux de l'appareil de coupure électrique lorsque ladite liaison mécanique est dans un état de déclenchement représentatif d'un défaut d'au moins un élément de protection.

Avantageusement, ledit module de protection comporte des moyens mécaniques de visualisation de l'état de fonctionnement liés mécaniquement à une poignée de manoeuvre de l'appareil de coupure électrique.

Dans un mode de réalisation particulier, le dispositif comporte un second module de protection supplémentaire comportant des seconds moyens d'actionnement mécanique et une seconde liaison mécanique de commande pour agir sur le déclenchement de l'appareil de coupure, la seconde liaison mécanique agissant sur le mécanisme de déclenchement de l'appareil de coupure à travers une première liaison mécanique d'un premier module de protection. Dans ce cas, l'appareil de coupure électrique est un appareil de coupure à quatre pôles, des sorties d'un premier et d'un second pôles recevant la connexion des éléments de protection dudit premier module de protection et des sorties d'un troisième et d'un quatrième pôles recevant la connexion d'éléments de protection dudit second module de protection supplémentaire.

Avantageusement, le dispositif comporte un dispositif électrique auxiliaire associé à un module de protection pour recevoir des actions ou pour actionner une liaison mécanique de déclenchement.

Selon une première variante, l'appareil de coupure et le module de protection sont modulaires et accouplés par un coté latéral.

Selon une seconde variante, l'appareil de coupure est un disjoncteur à boîtier moulé et le module de protection est monté sur des bornes de sortie en aval dudit disjoncteur, lesdits moyens de déclenchement destinés à recevoir une action de la liaison mécanique étant situés sur un coté aval dudit disjoncteur.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- les figures 1 et 2 représentent des schémas de dispositifs de l'état de la technique ;
- la figure 3 représente un schéma bloc d'un dispositif de protection selon un mode de réalisation de l'invention ;
- les figures 4 à 6 représentent des schémas mécaniques de fonctionnement d'un dispositif selon un mode de réalisation de l'invention ;
- les figures 7 et 8 représentent des vues intérieures d'un dispositif selon un mode de réalisation de l'invention ;
- les figures 9 à 12 représentent des variantes de parties mécaniques de dispositifs selon des modes de réalisation de l'invention ;
- la figure 13 représente un dispositif selon un mode de réalisation de l'invention à deux pôles protégés ;
- la figure 14 représente un dispositif selon un mode de réalisation de l'invention à module supplémentaire ;
- les figures 15 et 16 représentent des vues globales de dispositifs selon des modes de réalisation de l'invention ;
- la figure 17 et 18 représentent des vues partielles de voyant mécanique d'un dispositif selon l'invention ;
- la figure 19 représente un schéma d'une variante d'un dispositif selon l'invention avec des protections thermiques et électriques sur la varistance et l'éclateur ;
- la figure 20 représente un schéma d'une variante d'un dispositif selon l'invention avec un répartiteur d'arc électrique sur un fusible électrique ; et
- les figures 21 à 24 représentent des variantes d'un dispositif selon l'invention appliqué à des disjoncteurs à boîtier moulé pour forte puissance.

### DESCRIPTION DETAILLEE DE MODES DE REALISATION PREFERES

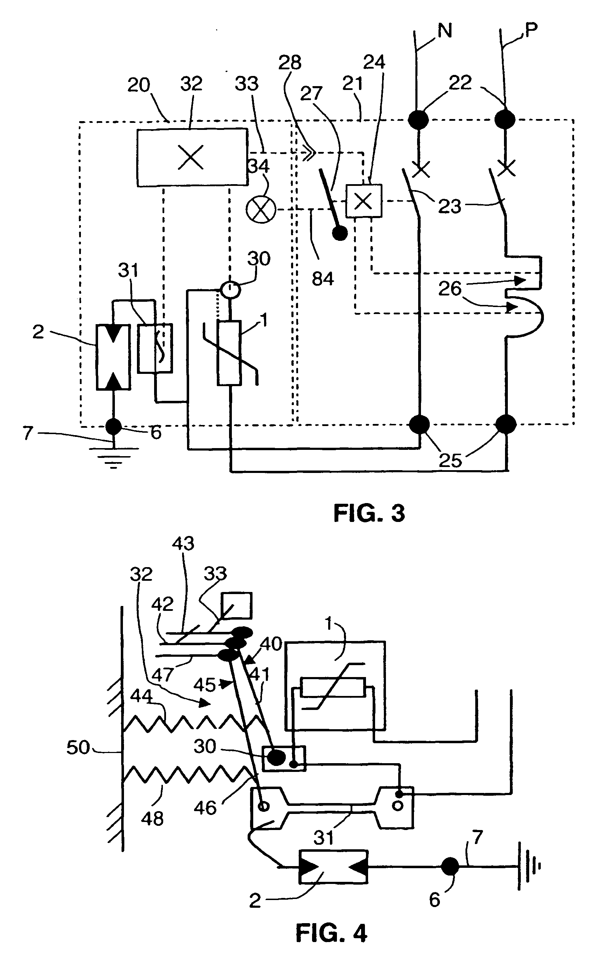

Un dispositif de protection contre les surtensions, représenté sur la figure 3, comporte un module de protection 20 destiné à être connecté à un appareil de coupure électrique 21 tel un disjoncteur. L'appareil de coupure comporte des entrées 22 destinées à être connectées à une ligne d'un réseau à protéger, des contacts principaux 23 commandés par un mécanisme de déclenchement 24, des sorties 25 reliée aux contacts principaux à travers un relais de déclenchement 26. Le relais de déclenchement disposé sur un ou plusieurs pôles actionne le mécanisme de déclenchement si un défaut électrique est détecté, en particulier un défaut de surcharge ou un défaut de court-circuit. Un organe 27 de manoeuvre telle une poignée permet de fermer ou d'ouvrir les contacts 23 à travers le mécanisme 24 de déclenchement. Ledit mécanisme de déclenchement peut être relié avec l'extérieur de l'appareil par un organe de couplage 28. L'organe de couplage est communément appelé barre de déclenchement.

Le module de protection comporte au moins un élément de protection contre les surtensions, notamment une varistance 1 et/ou un éclateur 2 destinés à être reliés aux sorties 25. Ledit module comporte aussi des moyens de séparation reliés à un élément de protection pour provoquer la séparation électrique dudit élément de protection suite à une augmentation de température ou et/ou de courant électrique. Sur le schéma de la figure 3, les moyens de séparation sont un pion thermique 30 relié thermiquement à la varistance 1 et un fusible électrique 31 connecté en série avec l'éclateur 2.

Dans un mode de réalisation de l'invention, le module de protection comporte un actionneur mécanique 32 relié audits moyens de séparation pour mettre une liaison mécanique 33 de commande dans un état de déclenchement représentatif d'un défaut d'au moins un élément de protection 1 ou 2 lorsque lesdits moyens de séparation 30 ou 31 ont provoqué une séparation. L'actionneur mécanique 32 est destinés à être couplé à un appareil de coupure électrique et à actionner l'ouverture ou le déclenchement dudit appareil lorsque ladite liaison mécanique 33 est dans un état de déclenchement.

Ainsi, lorsque le module 20 est accouplé à un disjoncteur 21 comme sur la figure 3, la liaison mécanique 33 peut agir sur le mécanisme de déclenchement 27. La varistance 1 et l'éclateur 2 sont connectés aux sorties 25 du disjoncteur. L'ensemble ainsi formé protège une ligne d'un réseau connectée aux entrées 22 lorsque les contacts 23 du disjoncteur sont fermés. Si un défaut thermique sur la varistance 1 provoque une détérioration du pion thermique 30, l'actionneur mécanique relié au pion 30 met la liaison mécanique dans un état de déclenchement qui agit sur le mécanisme de déclenchement 24 du disjoncteur pour ouvrir les contacts 23 et arrêter de connecter les éléments de protection 1 et 2. Un défaut électrique sur l'éclateur peut provoquer la fusion du fusible 31. Dans ce cas, l'actionneur mécanique relié au fusible 31 met aussi la liaison mécanique dans un état de déclenchement qui agit sur le mécanisme de déclenchement 24 du disjoncteur. Ainsi, l'actionneur mécanique centralise des mouvements mécaniques de liaisons avec différents pions ou fusibles des moyens de séparation.

L'actionneur mécanique est alors dans un état irréversible qui empêche le réarmement ou la fermeture du disjoncteur en maintenant la liaison mécanique 33 bloquée dans un état de déclenchement. La non-fermeture du disjoncteur sur un élément en défaut assure une sécurité élevée même si un des éléments en défaut est déconnecté par un dispositif de séparation. De plus, en cas d'impossibilité de fermeture ou de déclenchement à la fermeture, l'état du disjoncteur est représentatif de la disponibilité de la protection contre les surtensions et représentatif d'un défaut d'au moins un élément de protection. Dans tous les cas, la disponibilité de la distribution électrique de l'installation est préservée même si un élément de protection est en défaut.

Pour améliorer la visibilité de l'état de la protection, le module 20 comporte un voyant mécanique destiné à être associé avec l'organe de manoeuvre le l'appareil de coupure, par exemple la poignée du disjoncteur.

La figure 4 montre un schéma mécanique d'un module. L'actionneur mécanique comporte un premier levier 40 avec un premier bras 41 relié mécaniquement à un pion 30 et un second bras 42 agissant sur un centralisateur de commande 43 et à la liaison mécanique 33. Un premier ressort de rappel 44 est relié au premier bras du premier levier à un boîtier 50 pour rappeler ledit premier levier dans une position de défaut lorsqu'un le pion libère le levier suite à une séparation mécanique due à des contraintes thermiques. Par exemple, si le pion fond ou se détériore en provoquant une rupture, le levier 40 est rappelé vers le boîtier 50 par le ressort 44. Un second levier 45 comporte un premier bras 46 relié au fusible 31 et un second bras 47 agissant sur le centralisateur de commande 43. Un second ressort de rappel 48 est relié au premier bras 46 du second levier et au boîtier 50 pour rappeler ledit second levier dans une position de défaut lorsque le fusible libère le levier 45 suite à une séparation mécanique due à des contraintes électriques notamment un court-circuit. Par exemple, si le fusible fond ou se sectionne, le levier est rappelé vers le boîtier par le ressort 48.

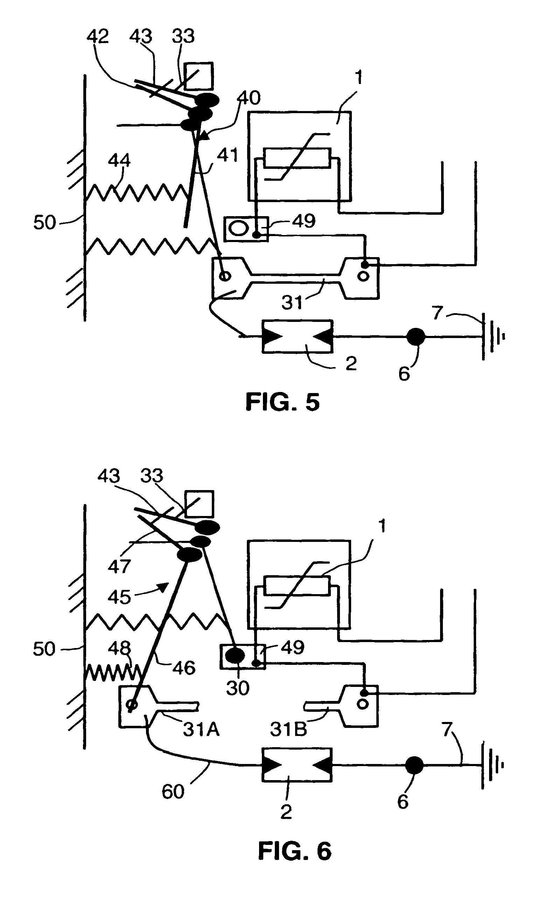

La figure 5 montre un schéma mécanique selon la figure 4 dans lequel le pion 30 a fondu. Le pion 30 initialement disposé sur une plage 49 en connexion thermique avec la varistance 1 a libéré le levier 40. Le ressort 44 attire le bras 41 vers le boîtier. Le bras 42 agit alors sur le centralisateur 43 et maintient la liaison 33 en position de déclenchement. Le bras 41 rappelé par le ressort 44 ne peut pas revenir dans la position initiale. De préférence, le pion est thermique réalisé en alliage métallique ou en matière plastique thermo-fusible à basse température de fusion.

La figure 6 montre un schéma mécanique selon la figure 4 dans lequel le fusible 31 a fondu. Le sectionnement du fusible 31 en deux parties 31 A et 31 B ouvre la connexion électrique avec l'éclateur 2 et libère le levier 45. Le ressort 48 attire le bras 46 vers le boîtier 50. Le bras 47 agit alors sur le centralisateur 43 et maintient la liaison 33 en position de déclenchement. Le bras 46 rappelé par le ressort 44 ne peut pas revenir dans la position initiale. Pour permettre le déplacement facile du levier 46, une liaison électrique 60 entre l'éclateur et le fusible est de préférence souple, par exemple en fil électrique tressé.

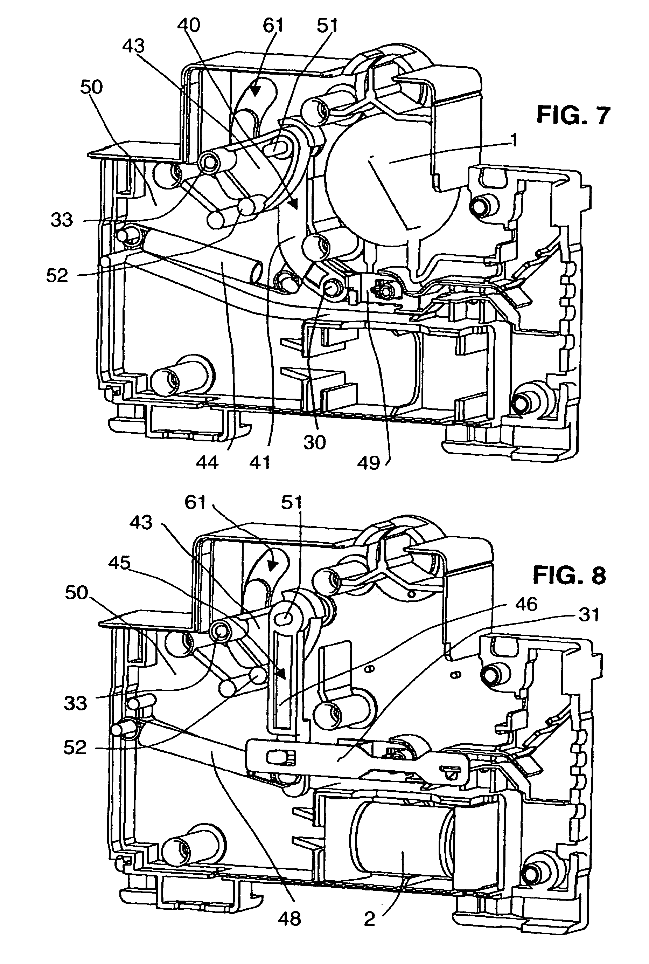

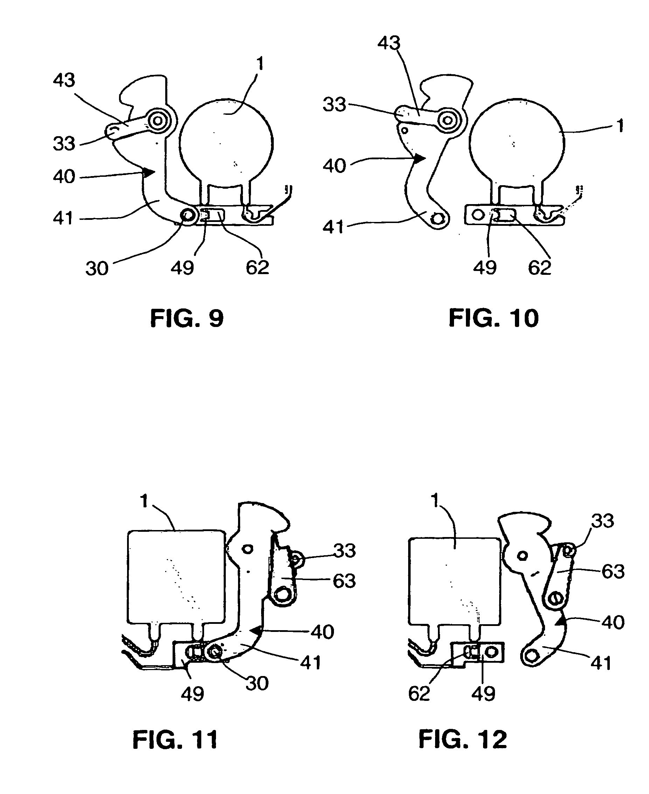

Les figures 7 et 8 représentent des vues intérieures d'un dispositif selon un autre mode de réalisation de l'invention. Les leviers 40 et 45 comportent chacun un seul bras respectivement 41 et 45 pivotant autour d'un même axe 51. Le centralisateur 43 pivote sur le même axe 51 que les leviers 40 et 45 et comporte des ergots pour recevoir les actions de déplacement provoquées par les leviers. La liaison mécanique 33 se déplace dans une ouverture 61 du boîtier 50. Sur la figure 7, une vue interne montre une disposition des éléments liés au déclenchement par la varistance. Une sortie de connexion de varistance est connectée à une plage 49 métallique qui maintient le pion 30. Cette connexion électrique entre pièces métalliques permet aussi un transfert thermique entre la varistance 1 et le pion 30. Le levier 40 à un seul bras 41 agit sur un ergot 52 du centralisateur 43 lorsqu'un ressort 44 attire ledit levier 40 vers une position déclenchée suite à une rupture ou à une fusion du pion 30. Sur la figure 8, une vue interne montre une disposition des éléments liés au déclenchement par l'éclateur 2. Le levier 45 à un seul bras 46 agit sur un ergot 52 du centralisateur 43 lorsqu'un ressort 48 attire le levier dans une position de déclenchement suite à une fusion ou à un sectionnement du fusible 1.

Les figures 9 à 12 représentent des variantes de parties mécaniques de dispositifs selon des modes de réalisation de l'invention en position de service en en position déclenchée. Sur les figures 9 et 10 le levier 40 pivote sur le même axe que le centralisateur et a une forme de came qui agit au bout dudit centralisateur sur la liaison mécanique 33. La plage 49 maintenant le pion 30 comporte une ouverture 62 faisant office de frein thermique. Sur les figures 11 et 12, le centralisateur 43 et la liaison mécanique 33 sont verrouillés dans une position de déclenchement par un crochet de blocage 63.

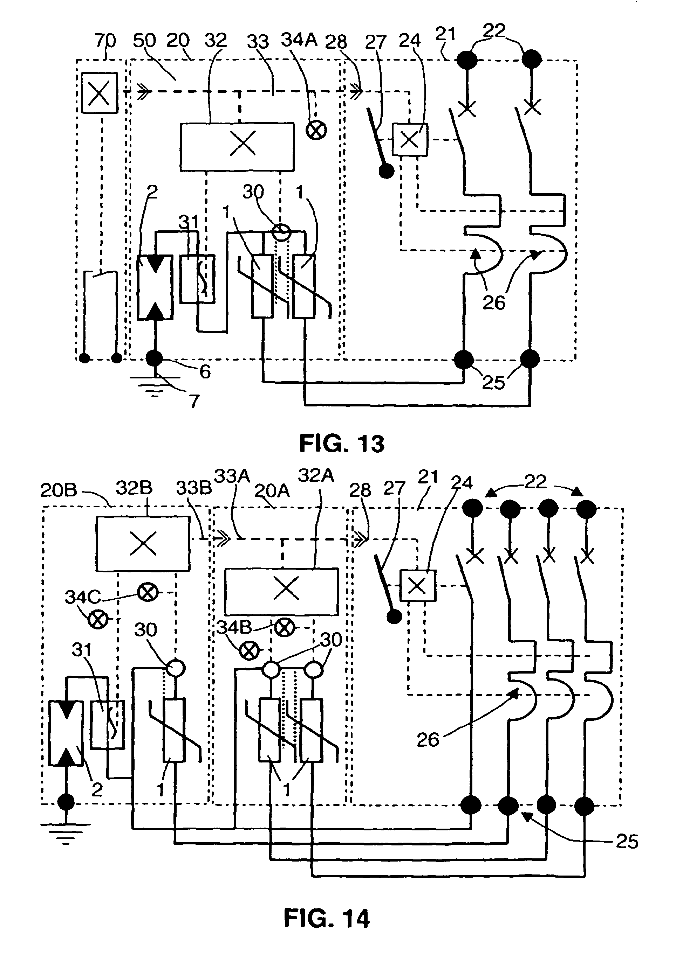

La figure 13 montre un schéma d'un dispositif de protection contre les surtensions où un module de protection 20 comporte un éclateur 2 et deux varistances 1. Dans cette configuration bipolaire les varistances sont connectées aux sorties 25 du disjoncteur 21 où les deux pôles sont protégés par le relais 26. Un point commun entre les varistances et connecté à l'éclateur à travers le fusible 31. Pour limiter le nombre de composant dans le boîtier, le module 20 comporte un pion thermique 30 en liaison thermique avec les deux varistances 1. Le module de protection 20 comporte une liaison mécanique 33 pouvant agir sur le disjoncteur 21 d'un premier coté de son boîtier 50 et sur un module de circuit auxiliaire 70 sur un autre côté de son boîtier 50. Ainsi, la liaison mécanique 33 peut transmettre des mouvements mécaniques de part en part du module de protection 20 et permettre un empilage de modules. Le module de circuit auxiliaire 70 peut être un module de sortie recevant des actions de la liaison mécanique, par exemple pour fournir un contact représentatif de l'état du disjoncteur et par conséquent de la disponibilité de la protection comme sur la figure 13, ou un module d'entrée pouvant recevoir des commandes pour actionner le disjoncteur, par exemple une bobine à maximum de tension ou une bobine à manque de tension. Dans ce mode réalisation, un voyant mécanique local 34A est relié à la liaison mécanique 33 des moyens d'actionnement 32 du module de protection 20.

La figure 14 montre un dispositif de protection contre les surtensions comportant deux modules de protection 20A et 20B associés à un disjoncteur à quatre pôles. Un premier module 20A de protection comporte deux varistances 1 et deux pions thermiques pour agir sur un premier mécanisme d'actionnement 32A. Une première liaison mécanique 33A est associée à l'organe de couplage 28 du disjoncteur d'un premier côté et reçoit une seconde liaison mécanique 33B d'un autre module 20B supplémentaire d'un second côté. Le second module 20B supplémentaire est comme celui décrit en figure 3, il comporte une varistance 1 et un éclateur 2 associés respectivement à un pion thermique 30 et un fusible 31 pour actionner un mécanisme d'actionnement 32B d'une seconde liaison mécanique 33B. Dans ce cas, la seconde liaison mécanique 33B, agit sur le disjoncteur à travers une première liaison mécanique 33A du module 20A. L'appareil de coupure électrique est un disjoncteur à quatre pôles, des sorties d'un premier et d'un second pôles recevant la connexion d'éléments de protection du premier module de protection 20A et des sorties d'un troisième et d'un quatrième pôles recevant la connexion d'éléments de protection contre les surtensions du module de protection supplémentaire 20B. Sur cette figure, les modules 20A et 20B peuvent comporter des voyant mécaniques locaux 34B, 34C, pour visualiser de manière différenciée l'état de chaque élément de protection. Si les mécanismes d'actionnement 34B et/ou 34C comportent des leviers les voyants mécanique locaux peuvent être associés à chaque levier pour signaler la rupture d'un pion ou d'un fusible.

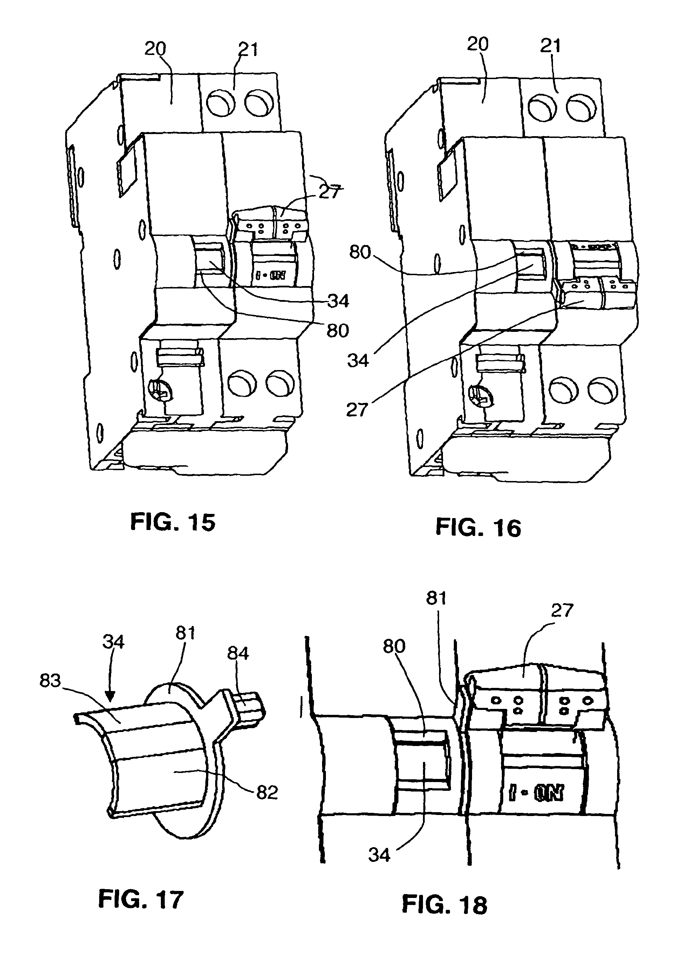

Les figures 15 et 16 montrent des vues globales d'un dispositif de protection comprenant un module 20 de protection et un disjoncteur 21 associés. La poignée 27 du disjoncteur peut servir à visualiser l'état de service de la fonction de protection. Cependant, pour améliorer cette visualisation, un voyant mécanique 34 est disposé sur le module de protection et relié mécaniquement à la poignée 27 lors de l'assemblage du module avec le disjoncteur. Sur la figure 15, la protection contre les surtensions est active, le disjoncteur est fermé, la poignée est dans une première position haute, et le voyant affiche une première couleur dans une fenêtre 80 du module 20. Sur la figure 16, la protection contre les surtensions est inactive, le disjoncteur est ouvert, la poignée est dans une seconde position basse et le voyant affiche une seconde couleur dans la fenêtre 80. La seconde position ouverte peut être causée par un défaut d'un élément de protection. Dans ce cas, la fermeture ne peut pas être activée.

Les figures 17 et 18 montrent des vues partielles du voyant mécanique 34 et son association à la poignée 27. Sur la figure 17, le voyant comporte un support circulaire 81 avec une première zone de d'affichage 82 d'une première couleur et une seconde zone d'affichage 83 d'une seconde couleur. Un ergot 84 dépassant du support 81 est destiné à être introduit dans un orifice latéral de la poignée 27. Sur la figure 18, le voyant 34 et la poignée 27 sont associés par l'ergot 84.

Dans d'autres modes de réalisation, l'appareil de coupure peut comporter un dispositif de verrouillage externe pour empêcher la fermeture ou l'ouverture manuelle par la poignée. La position ouverte ou fermée de la poignée étant représentative de l'état de disponibilité de la protection contre les surtensions.

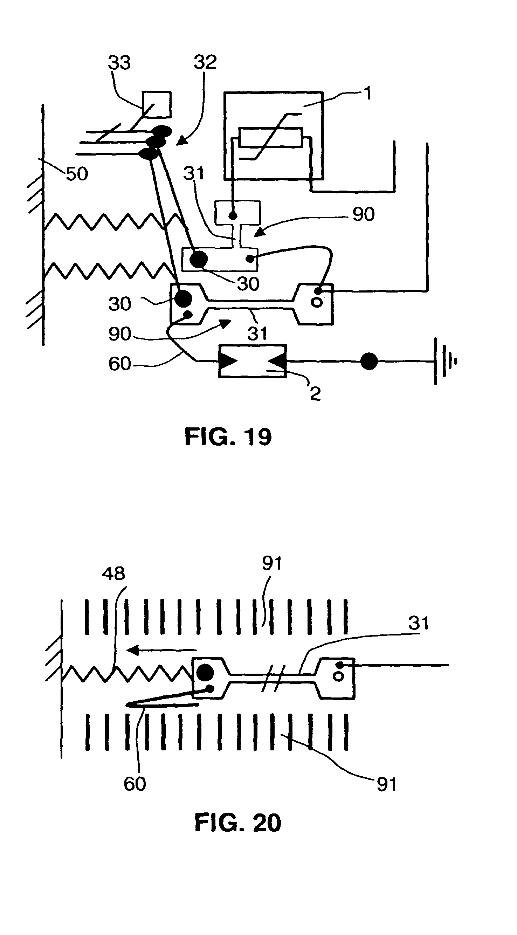

La figure 19 montre un mode de réalisation où les moyens de séparation de la varistance 1 et de l'éclateur 2 comportent une combinaison 90 d'un fusible électrique 31 et d'un pion thermique 30. La séparation mécanique du fusible électrique ou du pion thermique pouvant provoquer la commande des moyens d'actionnement mécanique.

Sur la figure 20, le module de protection comporte un fusible 31 de protection de l'éclateur composé d'une lame métallique positionnée dans des ailettes de répartition d'arc électrique.

Les ressorts de rappel 44 et 48 sont représentés sur les figures avec des effets de traction sur les leviers. Cependant, d'autres dispositions de ressorts sont possibles, par exemple des ressorts disposés pour agir en compression, des ressorts à lames ou des ressorts à spirales.

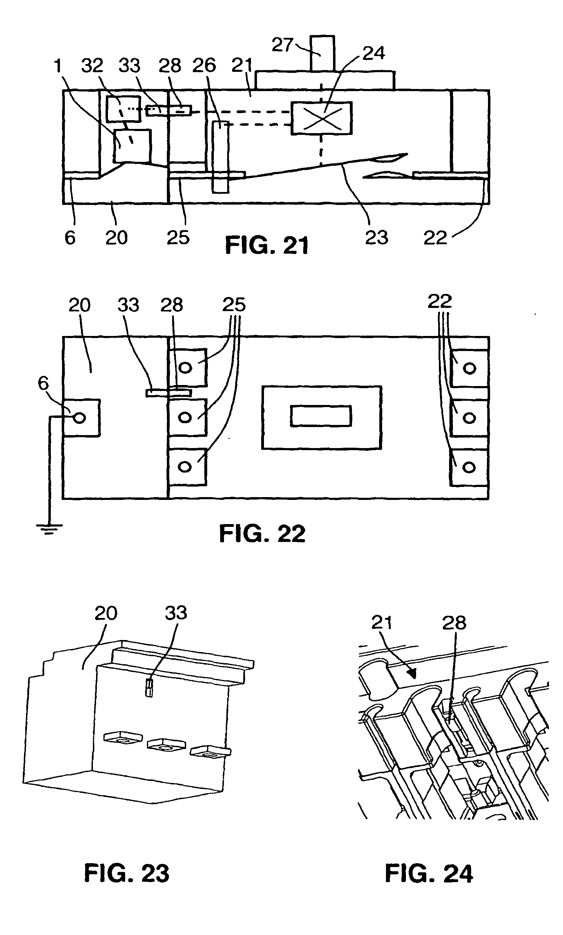

Pour des fortes puissances, le l'appareil de coupure 21 peut être un disjoncteur en boîtier moulé comportant un organe 28 de déclenchement par des circuits auxiliaires disposé en aval. Ainsi, sur les figures 21 et 22, le dispositif 20 de protection contre les surtensions est disposé en aval du disjoncteur 21 en boîtier moulé. Les bornes de connexion 25 en aval du disjoncteur recevant le dispositif de protection 20 comme un circuit auxiliaire présentant une liaison mécanique 33 de déclenchement. L'intérieur du dispositif de protection 20 comporte des caractéristiques semblables à celles décrites ci-dessus dans les figures 3 à 20. La figure 23 montre une vue extérieure d'un module de protection avec une liaison mécanique 33 et pouvant être associé à un disjoncteur 21 à boîtier moulé. La figure 24 montre une vue détaillée d'un l'organe de déclenchement 28 d'un disjoncteur boîtier moulé pouvant recevoir un dispositif de protection 20 de la figure 23.

Les éléments de protection sont de préférences des varistances à oxyde de zinc ou des éclateurs à ampoules à gaz ou à décharges dans l'air. Cependant d'autres éléments de protection en surtension peuvent être utilisés, par exemple des varistances réalisées dans d'autres matériaux, des composants semi-conducteurs tels que des diodes à avalanches ou à retournement, ou des combinaisons de plusieurs composants pour limiter une tension électrique.

Le dispositif de protection contre les surtensions est de préférence réalisé sous la forme d'appareillage modulaire pouvant être facilement assemblé et associé. Cependant, il peut être aussi réalisé sous d'autres formes.

L'appareil de coupure est de préférence un disjoncteur comportant une protection en surcharge et/ou une protection en court-circuit. Par exemple, le calibre des protections peut être réglé ou choisi en fonction des capacités des éléments de protection. Il est également possible d'utiliser d'autres appareils de coupure, par exemple des interrupteurs, des interrupteurs différentiels ou des relais.

## Revendications

1. Dispositif de protection contre des surtensions comportant au moins un module (20) de protection destiné à être connecté à un appareil (21) de coupure électrique, ledit module comportant :
- au moins un élément (1, 2) de protection contre les surtensions : et
- des moyens de séparation (30, 31) reliés à au moins un élément de protection pour provoquer une séparation électrique et/ou mécanique représentative d'un défaut d'un élément de protection suite à une augmentation de température et/ou de courant électrique,
**caractérisé en ce que** le module (20) de protection comporte des moyens (33, 33A, 33B) d'actionnement mécanique reliés audits moyens de séparation (30, 31) et comportant une liaison mécanique de commande (33, 33A, 33B), ladite liaison mécanique (33, 33A, 33B) de commande étant mise dans un état de déclenchement représentatif d'un défaut d'au moins un élément de protection lorsque lesdits moyens de séparation ont provoqué une séparation, lesdits moyens d'actionnement mécanique étant destinés à être couplés à un appareil (21) de coupure électrique à travers la liaison mécanique (33) pour actionner l'ouverture ou le déclenchement dudit appareil lorsque ladite liaison mécanique (33) est dans un état de déclenchement.

2. Dispositif selon la revendication 1 **caractérisé en ce que** les moyens d'actionnement mécanique bloquent la liaison mécanique dans un état de déclenchement lorsque lesdits moyens de séparation (30, 31) ont provoqué une séparation.

3. Dispositif selon l'une des revendications 1 ou 2 **caractérisé en ce qu'**au moins un élément de protection est au moins une varistance (1) en liaison thermique avec un pion thermique (30) des moyens de séparation, ledit pion (30) étant relié aux moyens (32, 32A, 328) d'actionnement mécanique pour positionner la liaison mécanique (33, 33A, 33B) dans un état de déclenchement suite à une fusion dudit pion provoquée par un échauffement de ladite varistance.

4. Dispositif selon l'une quelconque des revendications 1 à 3 **caractérisé en ce qu'**au moins un élément de protection est au moins un éclateur (2) de tension en liaison électrique avec un fusible électrique (31) des moyens de séparation, ledit fusible étant relié aux moyens (32, 32A, 32B) d'actionnement mécanique pour positionner la liaison mécanique (33, 33A, 338) dans un état de déclenchement suite à une fusion dudit fusible provoquée par une augmentation du courant dans ledit éclateur.

5. Dispositif selon la revendication 4 **caractérisé en ce que** les moyens d'actionnement mécanique comportent des moyens de centralisation (43) pour centraliser des actions mécaniques provoquées par des liaisons avec des pions thermiques ou des fusibles des moyens de séparation.

6. Dispositif selon l'une quelconque des revendications 1 à 5 **caractérisé en ce que** les moyens d'actionnement mécanique comportent :
- au moins un levier (40, 45) relié d'une part aux moyens de séparation (30, 31) et d'autre part à la liaison mécanique (33), et
- au moins un ressort (44, 48) de rappel relié audit levier et à un boîtier (50) du module de protection pour rappeler ledit levier dans une position de défaut lorsqu'un élément des moyens de séparation (30, 31) libère le levier suite à une séparation mécanique due à des contraintes thermiques ou électriques ;
ladite liaison mécanique (33) étant actionnée et maintenue dans un état de déclenchement par le levier lorsqu'il est dans une position de défaut.

7. Dispositif selon l'une quelconque des revendications 1 à 6 **caractérisé en ce que** les moyens de séparation comportent au moins une combinaison (90) d'un élément fusible (31) électrique et d'un pion thermique (30), la séparation mécanique de l'élément fusible électrique ou du pion thermique pouvant provoquer la commande des moyens d'actionnement mécanique (32).

8. Dispositif selon l'une quelconque des revendications 1 à 7 **caractérisé en ce que** les moyens de séparation comportent au moins pion (30) thermique réalisé en alliage métallique ou en matière plastique thermo-fusible, la fonte ou la fusion du pion provoquant une séparation mécanique agissant sur les moyens (32) mécanique d'actionnement.

9. Dispositif selon l'une quelconque des revendications 1 à 8 **caractérisé en ce qu'**au moins un module de protection comporte des moyens de séparation avec un élément fusible (31) électrique composé d'une lame métallique positionnée dans des ailettes (91) de répartition d'arc.

10. Dispositif selon l'une quelconque des revendications 1 à 9 **caractérisé en ce qu'**au moins un module de protection comporte des moyens mécaniques (34, 80) de visualisation de l'état de fonctionnement du dispositif de protection, lesdits moyens de visualisation comportant une liaison mécanique (84) destinée à être couplée avec un organe de manoeuvre (27) d'un appareil (21) de coupure électrique.

11. Dispositif selon l'une quelconque des revendications 1 à 10 **caractérisé en ce qu'**au moins un module de protection comporte des moyens mécaniques (34A) de visualisation de l'état de fonctionnement du dispositif de protection actionnés par la liaison mécanique de commande (33, 33A, 33B).

12. Dispositif selon l'une quelconque des revendications 1 à 11 **caractérisé en ce qu'**au moins un module de protection comporte des moyens mécaniques (34B, 34C) de visualisation locale actionnés par les moyens d'actionnement pour signaler de manière différentiée l'état des moyens de séparation (30, 31) d'au moins deux éléments de protection (1, 2).

13. Dispositif selon l'une quelconque des revendications 1 à 12 **caractérisé en ce qu'**il comporte un appareil de coupure électrique (21) associé audit module de protection (20, 20A), ledit appareil comportant des entrées (22) destinées à être connectées à une ligne à protéger, des contacts principaux (23) commandés par un mécanisme de déclenchement (24), et des sorties (25), ledit au moins un élément de protection contre les surtensions (1, 2) étant connecté aux sorties (25) de l'appareil de coupure et la liaison mécanique (33) de commande étant reliée aux moyens de déclenchement (24, 28) pour actionner l'ouverture et/ou bloquer la fermeture des contacts principaux (23) de l'appareil de coupure électrique lorsque ladite liaison mécanique (33) est dans un état de déclenchement représentatif d'un défaut d'au moins un élément de protection.

14. Dispositif selon la revendication 13 **caractérisé en ce que** ledit module de protection (20, 20A) comporte des moyens mécaniques (34) de visualisation de l'état de fonctionnement liés mécaniquement à une poignée (27) de manoeuvre de l'appareil (21) de coupure électrique.

15. Dispositif selon l'une des revendications 13 ou 14 **caractérisé en ce qu'**il comporte un second module (20B) de protection supplémentaire comportant des seconds moyens (32B) d'actionnement mécanique et une seconde liaison mécanique (33B) de commande pour agir sur le déclenchement de l'appareil de coupure (21), la seconde liaison mécanique (33B) agissant sur le mécanisme de déclenchement de l'appareil de coupure à travers une première liaison mécanique (33A) d'un premier module de protection (20A).

16. Dispositif selon la revendication 15 **caractérisé en ce que** l'appareil de coupure (21) électrique est un appareil de coupure à quatre pôles, des sorties d'un premier et d'un second pôles recevant la connexion d'éléments de protection (1, 2) dudit premier module de protection (20A) et des sorties d'un troisième et d'un quatrième pôles recevant la connexion d'éléments de protection (1, 2) dudit second module (20B) de protection supplémentaire.

17. Dispositif selon l'une quelconque des revendications 13 à 16 **caractérisé en ce qu'**il comporte un dispositif électrique auxiliaire (70) associé à un module de protection (20, 20A) pour recevoir des actions ou pour actionner une liaison mécanique (33) de déclenchement.

18. Dispositif selon l'une quelconque des revendications 13 à 17 **caractérisé en ce que** l'appareil de coupure (21) et le module de protection (20) sont modulaires et accouplés par un coté latéral.

19. Dispositif selon l'une quelconque des revendications 13 à 17 **caractérisé en ce que** l'appareil de coupure (21) est un disjoncteur à boîtier moulé et le module de protection (20) est monté sur des bornes (25) de sortie en aval dudit disjoncteur, lesdits moyens de déclenchement (28) destinés à recevoir une action de la liaison mécanique (33) étant situés sur un coté aval dudit disjoncteur.

## Claims

1. Voltage surge protection device comprising at least one protection module (20) designed to be connected to an electric switchgear apparatus (21), said module comprising:
- at least one protective element (1, 2) for protection against voltage surges; and
- separating means (30, 31) connected to at least one protective element to cause an electric and/or mechanical separation representative of a fault of a protective element following an increase of temperature and/or electric current,
**characterized in that** the protection module (20) comprises means (33, 33A, 33B) for mechanical actuation connected to said separating means (30, 31) and comprising a mechanical control link (33, 33A, 33B), said mechanical control link (33, 33A, 33B) being placed in a tripped state representative of a fault of at least one protective element when said separating means have caused a separation, said means for mechanical actuation being designed to be coupled to an electric switchgear apparatus (21) by means of the mechanical link (33) to actuate opening or tripping of said apparatus when said mechanical link (33) is in a tripped state.

2. Device according to claim 1 **characterized in that** the means for mechanical actuation disable the mechanical link in a tripped state when said separating means (30, 31) have caused a separation.

3. Device according to one of the claims 1 or 2 **characterized in that** at least one protective element is at least one voltage-dependent resistor (1) in thermal connection with a thermal pin (30) of the separating means, said pin (30) being connected to the means (32, 32A, 32B) for mechanical actuation to place the mechanical link (33, 33A, 33B) in a tripped state following melting of said pin caused by heating of said voltage-dependent resistor.

4. Device according to any one of the claims 1 to 3 **characterized in that** at least one protective element is at least a voltage surge arrester (2) in electric connection with an electric fuse (31) of the separating means, said fuse being connected to the means (32, 32A, 32B) for mechanical actuation to place the mechanical link (33, 33A, 33B) in a tripped state following melting of said fuse caused by an increase of the current in said voltage surge arrester.

5. Device according to claim 4 **characterized in that** the means for mechanical actuation comprise centralizing means (43) for centralizing mechanical actions caused by links with thermal pins or fuses of the separating means.

6. Device according to any one of the claims 1 to 5 **characterized in that** the means for mechanical actuation comprise:
- at least one lever (40, 45) connected on the one hand to the separating means (30, 31) and on the other hand to the mechanical link (33), and
- at least one return spring (44, 48) connected to said lever and to a case (50) of the protection module to return said lever to a fault position when an element of the separating means (30, 31) releases the lever following a mechanical separation due to thermal or electric stresses;
said mechanical link (33) being actuated and kept in a tripped state by the lever when it is in a fault position.

7. Device according to any one of the claims 1 to 6 **characterized in that** the separating means comprise at least one combination (90) of an electric fuse element (31) and a thermal pin (30), mechanical separation of the electric fuse element or of the thermal pin being able to cause actuation of the means (32) for mechanical actuation.

8. Device according to any one of the claims 1 to 7 **characterized in that** the separating means comprise at least one thermal pin (30) made of metal alloy or of thermo-fusible plastic material, melting or fusing of the pin causing a mechanical separation acting on the means (32) for mechanical actuation.

9. Device according to any one of the claims 1 to 8 **characterized in that** at least one protection module comprises separating means with an electric fuse element (31) composed of a metal blade positioned in arc distribution fins (91).

10. Device according to any one of the claims 1 to 9 **characterized in that** at least one protection module comprises mechanical display means (34, 80) for displaying the operating state of the protection device, said display means comprising a mechanical link (84) designed to be coupled with an operating member (27) of an electric switchgear apparatus (21).

11. Device according to any one of the claims 1 to 10 **characterized in that** at least one protection module comprises mechanical means (34A) for displaying the operating state of the protection device actuated by the mechanical control link (33, 33A, 33B).

12. Device according to any one of the claims 1 to 11 **characterized in that** at least one protection module comprises mechanical means (34B, 34C) for local display actuated by the actuating means to indicate the state of the separating means (30, 31) of at least two protective elements (1, 2) in differentiated manner.

13. Device according to any one of the claims 1 to 12 **characterized in that** it comprises an electric switchgear apparatus (21) in conjunction with said protection module (20, 20A), said apparatus comprising inputs (22) designed to be connected to a line to be protected, main contacts (23) controlled by a trip mechanism (24), and outputs (25), said at least one protective element against voltage surges (1, 2) being connected to the outputs (25) of the switchgear apparatus and the mechanical control link (33) being connected to the trip means (24, 28) to actuate opening and/or to disable closing of the main contacts (23) of the electric switchgear apparatus when said mechanical link (33) is in a tripped state representative of a fault of at least one protective element.

14. Device according to claim 13 **characterized in that** said protection module (20, 20A) comprises mechanical means (34) for displaying the operating state mechanically linked to an operating handle (27) of the electric switchgear apparatus (21).

15. Device according to one of the claims 13 or 14 **characterized in that** it comprises a second additional protection module (20B) comprising second means (32B) for mechanical actuation and a second mechanical control link (33B) to act on tripping of the switchgear apparatus (21), the second mechanical link (33B) acting on the trip mechanism of the switchgear apparatus via a first mechanical link (33A) of a first protection module (20A).

16. Device according to claim 15 **characterized in that** the electric switchgear apparatus (21) is a four-pole switchgear apparatus, outputs of a first and second pole receiving connection of protective elements (1, 2) of said first protection module (20A) and outputs of a third and fourth pole receiving connection of protective elements (1, 2) of said second additional protection module (20B).

17. Device according to any one of the claims 13 to 16 **characterized in that** it comprises an auxiliary electric device (70) associated with a protection module (20, 20A) to receive actions or to actuate a mechanical tripping link (33).

18. Device according to any one of the claims 13 to 17 **characterized in that** the switchgear apparatus (21) and the protection modules (20) are modular and coupled via a lateral side.

19. Device according to any one of the claims 13 to 17 **characterized in that** the switchgear apparatus (21) is a moulded case circuit breaker and the protection module (20) is mounted on output terminals (25) down-line from said circuit breaker, said trip means (28) designed to receive an action from the mechanical link (33) being situated on a down-line side of said circuit breaker.

## Patentansprüche

1. Überspannungs-Schutzeinrichtung mit mindestens einem Schutzmodul (20), das dazu dient, mit einem elektrischen Schaltgerät (21) verbunden zu werden, welches Modul
- mindestens ein Überspannungs-Schutzorgan (1, 2) und
- mit mindestens einem Schutzorgan verbundene Trennmittel (30, 31) umfasst, welche dazu dienen, eine elektrische und/oder mechanische Trennung zu bewirken, die einen Fehler eines Schutzorgans aufgrund des Anstiegs der Temperatur und/oder des elektrischen Stroms abbildet,
**dadurch gekennzeichnet, dass** das Schutzmodul (20) mechanische Betätigungsmittel (33, 33A, 33B) umfasst, die mit den genannten Trennmitteln (30, 31) verbunden sind und eine mechanische Steuerverbindung (33, 33A, 33B) umfassen, welche mechanische Steuerverbindung (33, 33A, 33B) in eine, einen Fehler mindestens eines Schutzorgans abbildende Auslösestellung verbracht wird, wenn die genannten Trennmittel eine Trennung bewirkt haben, wobei die genannten mechanischen Betätigungsmittel dazu dienen, über die mechanische Verbindung (33) mit einem elektrischen Schaltgerät (21) gekoppelt zu werden, um die Abschaltung oder Auslösung des genannten Schaltgeräts zu bewirken, wenn sich die genannte mechanische Verbindung (33) in einer Auslösestellung befindet.

2. Einrichtung nach Anspruch 1, **dadurch gekennzeichnet, dass** die mechanischen Betätigungsmittel die mechanische Verbindung in einer Auslösestellung blockieren, wenn die genannten Trennmittel (30, 31) eine Trennung bewirkt haben.

3. +Einrichtung nach Anspruch 1 oder 2, **dadurch gekennzeichnet, dass** mindestens ein Schutzorgan als mindestens ein Varistor (1) ausgebildet ist, der thermisch mit einem Thermostift (30) der Trennmittel verbunden ist, welcher Stift (30) mit den mechanischen Betätigungsmitteln (32, 32A, 32B) verbunden ist, um die mechanische Verbindung (32, 32A, 32B) in eine Auslösestellung zu verbringen, wenn eine Erwärmung des genannten Varistors ein Schmelzen des genannten Stifts bewirkt hat.

4. Einrichtung nach irgendeinem der Ansprüche 1 bis 3, **dadurch gekennzeichnet, dass** mindestens ein Schutzorgan als mindestens ein Überspannungsableiter (2) ausgebildet ist, der elektrisch mit einer Schmelzsicherung (31) der Trennmittel verbunden ist, welche Schmelzsicherung mit den mechanischen Betätigungsmitteln (32, 32A, 32B) verbunden ist, um die mechanische Verbindung (32, 32A, 32B) in eine Auslösestellung zu verbringen, wenn ein Stromanstieg im genannten Überspannungsableiter das Durchschmelzen der genannten Schmelzsicherung bewirkt hat.

5. Einrichtung nach Anspruch 4, **dadurch gekennzeichnet, dass** die mechanischen Betätigungsmittel Konzentrationsmittel (43) umfassen, um mechanische Bewegungen an einem Punkt zusammenzuführen, die durch Verbindungen mit Thermostiften oder Schmelzsicherungen der Trennmittel bewirkt werden.

6. Einrichtung nach irgendeinem der Ansprüche 1 bis 5, **dadurch gekennzeichnet, dass** die mechanischen Betätigungsmittel
- mindestens einen Hebel (40, 45), der einerseits mit den Trennmitteln (30, 31) und andererseits mit der mechanischen Verbindung (33) gekoppelt ist, und
- mindestens eine Rückstellfeder (44, 48) umfassen, die mit dem genannten Hebel sowie mit einem Gehäuse (50) des Schutzmoduls verbunden ist, um den genannten Hebel in Richtung einer Fehlerstellung zu beaufschlagen, wenn ein Element der Trennmittel (30, 31) den Hebel als Folge einer durch thermische oder elektrische Überlastung bewirkten mechanischen Trennung freigibt,
wobei die genannte mechanische Verbindung (33) durch den Hebel betätigt und in einer Auslösestellung gehalten wird, wenn sich dieser in einer Fehlerstellung befindet.

7. Einrichtung nach irgendeinem der Ansprüche 1 bis 6, **dadurch gekennzeichnet, dass** die Trennmittel mindestens eine Kombination (90) aus einem Schmelzsicherungselement (31) und einem Thermostift (30) umfassen, wobei die mechanische Trennung des Schmelzsicherungselements bzw. des Thermostifts die Ansteuerung der mechanischen Betätigungsmittel (32) bewirken kann.

8. Einrichtung nach irgendeinem der Ansprüche 1 bis 7, **dadurch gekennzeichnet, dass** die Trennmittel mindestens einen Thermostift (30) umfassen, der aus einer Metalllegierung oder einem warmschmelzenden Kunststoff besteht, wobei das Auf- bzw. Durchschmelzen des Thermostifts eine mechanische Trennung bewirkt, wodurch die mechanischen Betätigungsmittel (32) beaufschlagt werden.

9. Einrichtung nach irgendeinem der Ansprüche 1 bis 8, **dadurch gekennzeichnet, dass** mindestens ein Schutzmodul Trennmittel mit einem Schmelzsicherungselement (31) umfasst, das als zwischen den Lichtbogen-Aufteilungsstegen (91) angeordneter Metallstreifen ausgebildet ist.

10. Einrichtung nach irgendeinem der Ansprüche 1 bis 9, **dadurch gekennzeichnet, dass** mindestens ein Schutzmodul mechanische Anzeigemittel (34, 80) zur Anzeige des Betriebszustands der Schutzeinrichtung umfasst, welche Anzeigemittel eine mechanische Verbindung (84) umfassen, die dazu dient, mit einem Antriebsorgan (27) eines elektrischen Schaltgeräts (21) gekoppelt zu werden.

11. Einrichtung nach irgendeinem der Ansprüche 1 bis 10, **dadurch gekennzeichnet, dass** mindestens ein Schutzmodul mechanische Anzeigemittel (34A) zur Anzeige des Betriebszustands der Schutzeinrichtung umfasst, welche Anzeigemittel durch die mechanische Steuerverbindung (33, 33A, 33B) betätigt werden.

12. Einrichtung nach irgendeinem der Ansprüche 1 bis 11, **dadurch gekennzeichnet, dass** mindestens ein Schutzmodul lokale mechanische Anzeigemittel (34B, 34C) umfasst, die durch die Betätigungsmittel angesteuert werden, um die Betriebszustand der Trennmittel (30, 31) mindestens zweier Schutzorgane (1, 2) differenziert anzuzeigen.

13. Einrichtung nach irgendeinem der Ansprüche 1 bis 12, **dadurch gekennzeichnet, dass** sie ein dem genannten Schutzmodul (20, 20A) zugeordnetes elektrisches Schaltgerät (21) mit Eingängen (22) zum Anschluss an eine zu schützende Leitung, über einen Auslösemechanismus (24) angesteuerten Hauptkontakten (23) sowie mit Ausgängen (25) umfasst, wobei das genannte mindestens einfach vorhandene Überspannungs-Schutzorgan (1, 2) an die Ausgänge (25) des Schaltgeräts angeschlossen und die mechanische Steuerverbindung (33) mit den Auslösemitteln (24, 28) verbunden ist, um die Abschaltung und/oder Einschaltsperre der Hauptkontakte (23) des elektrischen Schaltgeräts zu bewirken, wenn sich die genannte mechanische Verbindung (33) in einer Auslösestellung befindet, die einen Fehler in mindestens einem Schutzorgan abbildet.

14. Einrichtung nach Anspruch 13, **dadurch gekennzeichnet, dass** das genannte Schutzmodul (20, 20A) mechanische Anzeigemittel (34) zur Anzeige des Betriebszustands umfasst, welche Anzeigemittel mechanisch mit einem Antriebshebel (27) des elektrischen Schaltgeräts (21) verbunden sind.

15. Einrichtung nach Anspruch 13 oder 14, **dadurch gekennzeichnet, dass** sie ein zweites, zusätzliches Schutzmodul (20B) mit zweiten mechanischen Betätigungsmitteln (32B) und einer zweiten mechanischen Steuerverbindung (33B) zur Ansteuerung der Auslösung des elektrischen Schaltgeräts (21) umfasst, wobei die zweite mechanische Verbindung (33B) über eine erste mechanische Verbindung (33A) eines ersten Schutzmoduls (20A) auf den Auslösemechanismus des elektrischen Schaltgeräts wirkt.

16. Einrichtung nach Anspruch 15, **dadurch gekennzeichnet, dass** das elektrische Schaltgerät (21) als vierpoliges Schaltgerät ausgeführt ist, wobei an die Ausgänge eines ersten und eines zweiten Pols Schutzorgane (1, 2) des genannten ersten Schutzmoduls (20A) und an die Ausgänge eines dritten und eines vierten Pols Schutzorgane (1, 2) des genannten zusätzlichen, zweiten Schutzmoduls (20B) angeschlossen sind.

17. Einrichtung nach irgendeinem der Ansprüche 13 bis 16, **dadurch gekennzeichnet, dass** sie eine elektrische Hilfseinrichtung (70) umfasst, die einem Schutzmodul (20, 20A) zugeordnet ist, um mit Schalthandlungen beaufschlagt zu werden oder eine mechanische Auslöseverbindung (33) zu betätigen.

18. Einrichtung nach irgendeinem der Ansprüche 13 bis 17, **dadurch gekennzeichnet, dass** das Schaltgerät (21) und das Schutzmodul (20) modular ausgeführt und seitlich angebaut sind.

19. Einrichtung nach irgendeinem der Ansprüche 13 bis 17, **dadurch gekennzeichnet, dass** das elektrische Schaltgerät (21) als Leistungsschalter mit Isolierstoffgehäuse ausgebildet und das Schutzmodul (20) auf der Abgangsseite des genannten Leistungsschalters an Ausgangsklemmen (25) montiert ist, wobei die zur Beaufschlagung durch die mechanische Verbindung (33) dienenden, genannten Auslösemittel (28) auf einer Abgangsseite des genannten Leistungsschalters angeordnet sind.
